# EUROPÄISCHE PATENTANMELDUNG

(11) **EP 4 249 403 A1**
(43) Veröffentlichungstag der Anmeldung: **27.09.2023**
(21) Anmeldenummer: 23152293.9
(22) Anmeldetag: 18.01.2023
(51) Int. Cl.: B65G 1/02

(54) **LAGER- UND ENTNAHMESYSTEM SOWIE WAND FÜR EIN LAGER- UND ENTNAHMESYSTEM**

(30) Priorität: 22.03.2022 DE 102022202779
(71) Anmelder: Gebhardt Fördertechnik GmbH, D-74889 Sinsheim (DE)
(72) Erfinder: Knoop, Alexander, 74889 Sinsheim (DE); Gebhardt, Marco, 74889 Sinsheim (DE)
(74) Vertreter: Ullrich & Naumann PartG mbB

(57) **Zusammenfassung**

Im Hinblick auf einen sicheren Betrieb des Lager- und Entnahmesystems mit konstruktiv einfachen Mitteln ist ein Lager- und Entnahmesystem für Behälter (16), umfassend: eine Gitterstruktur (7) mit einer Vielzahl von Gitterzellen, wobei jede Gitterzelle eine Lagersäule (8) einer unterhalb der Gitterstruktur (7) angeordneten Behälter-Lagerstruktur definiert und wobei die Lagersäulen (8) ein Tragwerk aus mehreren Regalstehern (6) aufweisen und eingerichtet sind, jeweils einen vertikalen Stapel von Behältern (16) aufzunehmen, und eine Schutzeinrichtung oder Brandschutzeinrichtung mit mindestens einer einen Träger (3) aufweisenden Wand (1) zum Unterteilen des Lager- und Entnahmesystems in mehrere Abschnitte, derart ausgestaltet und weitergebildet, dass die Wand (1) mehrere in mehrlagiger Weise an dem Träger (3) angeordnete Platten (2) aufweist. Des Weiteren ist eine Wand (1) für ein derartiges Lager- und Entnahmesystem angegeben.

## Beschreibung

Die Erfindung betrifft ein Lager- und Entnahmesystem für Behälter, umfassend: eine Gitterstruktur mit einer Vielzahl von Gitterzellen, wobei jede Gitterzelle eine Lagersäule einer unterhalb der Gitterstruktur angeordneten Behälter-Lagerstruktur definiert und wobei die Lagersäulen ein Tragwerk aus mehreren Regalstehern aufweisen und eingerichtet sind, jeweils einen vertikalen Stapel von Behältern aufzunehmen, und eine Schutzeinrichtung oder Brandschutzeinrichtung mit mindestens einer einen Träger aufweisenden Wand zum Unterteilen des Lager- und Entnahmesystems in mehrere Abschnitte.

Des Weiteren betrifft die vorliegende Erfindung eine Wand für ein solches Lager- und Entnahmesystem.

Lager- und Entnahmesysteme der eingangs genannten Art sind aus der Praxis bekannt und existieren in unterschiedlichen Ausführungsformen. Die WO 2021/152170 A1 zeigt beispielsweise ein solches Lager- und Entnahmesystem 1 für Behälter 106. Das Lager- und Entnahmesystem 1 ist als Blocklager ausgebildet. Transportfahrzeuge 201 auf dem Blocklager können Behälter 106 auf einer Gitterstruktur 104 transportieren. Zur Bewegung eines Behälters 106 in einer Lagersäule 105 dient ein Greifer 304, mit dem ein Behälter 106 gegriffen werden kann. Das Lager- und Entnahmesystem 1 weist vertikale Regalsteher 102 auf, zwischen denen funktionale Plattenelemente 16 angeordnet werden können, wobei die Plattenelemente 16 mittels Adapterprofilen 20 an Regalstehern 102 befestigt werden. Die Plattenelemente können als versteifende Plattenelemente 16 oder als feuerhemmende Plattenelemente 14 zwischen Regalstehern 102 angeordnet werden. Derartige Plattenelemente 14, 16 können als Brandschutzeinrichtung ein Lager- und Entnahmesystem 1 in mehrere Abschnitte unterteilen und bilden als Wand zwischen den Regalstehern 102 gleichzeitig einen Träger oder eine tragende Struktur.

Des Weiteren ist aus der WO 2016/166323 A1 ein Lager- und Entnahmesystem bekannt, bei dem wandförmige Teiler 19 das Lager- und Entnahmesystem in mehrere Abschnitte unterteilen können. Die jeweils gebildeten Abschnitte sind gegen die restlichen Bereiche des Lager- und Entnahmesystems abgedichtet, sodass Löschwasser in den Abschnitten nicht in die restlichen Bereiche des Lager- und Entnahmesystems gelangen kann.

Die aus dem Stand der Technik bekannten Brandschutzeinrichtungen sind in der Praxis häufig nicht sehr wirksam. Um ein mögliches Feuer in einem als Blocklager ausgebildeten Lager- und Entnahmesystem, welches durch Transportfahrzeuge oder Roboter von oben bedient wird, auf einen kleinen kontrollierbaren Raum zu begrenzen, ist es gemäß Stand der Technik üblich, das Blocklager durch geeignete Brandschutzwände in Abschnitte zu unterteilen. Hierzu werden häufig Stahlbleche an den vorhandenen Regalstehern aus Aluminium angebracht. Durch die niedrige Erweichungstemperatur von Aluminium sind diese Wände jedoch anfällig gegenüber Hitze und können im Falle eines Brandes schon nach kurzer Zeit ihre Stabilität verlieren und kollabieren. Stahlblech weist zudem eine hohe Wärmeleitfähigkeit auf, sodass die Hitze des Feuers auf die andere Seite der Wand abgestrahlt wird und somit erhebliche Schäden verursacht werden oder ein weiteres Feuer entfacht werden kann. Der Ersatz des vorhandenen Aluminiumtragwerks durch andere Materialien hat zur Folge, dass aufwändige Führungsschienen an den Brandschutzwänden angebracht werden müssen, damit Lagerfahrzeuge auch in unmittelbarer Nähe zur Wand Lagergut in vertikaler Richtung abstellen und aufnehmen können.

Der vorliegenden Erfindung liegt daher die Aufgabe zugrunde, ein Lager- und Entnahmesystem sowie eine Wand für ein Lager- und Entnahmesystem anzugeben, wonach ein sicherer Betrieb des Lager- und Entnahmesystems mit konstruktiv einfachen Mitteln ermöglicht ist.

Erfindungsgemäß wird die voranstehende Aufgabe durch ein Lager- und Entnahmesystem mit den Merkmalen des Anspruchs 1 und durch eine Wand mit den Merkmalen des Anspruchs 15 gelöst.

Danach ist das Lager- und Entnahmesystem gemäß Anspruch 1 dadurch gekennzeichnet, dass die Wand mehrere in mehrlagiger Weise an dem Träger angeordnete Platten aufweist.

Anspruch 15 beansprucht die Wand dieses Lager- und Entnahmesystems.

In erfindungsgemäßer Weise ist zunächst erkannt worden, dass durch geschickte Ausgestaltung der Schutzeinrichtung oder Brandschutzeinrichtung die voranstehende Aufgabe auf überraschend einfache Weise gelöst wird. In weiter erfindungsgemäßer Weise ist hierbei im Konkreten die Wand derart ausgestaltet, dass sie mehrere an dem Träger angeordnete Platten aufweist, wobei diese Platten mehrlagig an dem Träger angeordnet sind. Durch die mehrlagige Anordnung der Platten kann in besonders effektiver Weise eine sehr starke Wärmedämmung erreicht werden, die ein Ausbreiten eines Brandes von einem durch Feuer betroffenen Abschnitt in andere Abschnitte sehr stark hemmt. Damit kann ein sehr hoher Brandschutz für das Lager- und Entnahmesystem insgesamt gewährleistet werden, wodurch die Sicherheit des Betriebs des Lager- und Entnahmesystems signifikant erhöht ist.

Folglich sind mit dem erfindungsgemäßen Lager- und Entnahmesystem und der erfindungsgemäßen Wand ein Lager- und Entnahmesystem und eine Wand bereitgestellt, wonach ein sicherer Betrieb mit konstruktiv einfachen Mitteln ermöglicht ist.

Im Hinblick auf eine konstruktiv besonders einfache und effektive Ausgestaltung kann mindestens eine Platte auf einer Seite des Trägers und mindestens eine weitere Platte auf einer anderen Seite des Trägers angeordnet sein. Der Träger wird hierdurch quasi sandwichartig von Platten eingefasst, wodurch sich eine besonders stabile und sichere Konstruktion der Wand ergibt. Darüber hinaus ist der Träger bei einer solchen Anordnung durch eine mögliche wärmedämmende Wirkung der Platten vor einer schädigenden Hitzeeinwirkung geschützt. Die Wand kann dadurch insgesamt einer durch ein Feuer entstandenen Hitze lange widerstehen.

In weiter besonders sicherer Weise kann zwischen der mindestens einen Platte und der mindestens einen weiteren Platte ein Hohlraum gebildet sein. In dem Hohlraum kann einerseits der Träger untergebracht sein und kann andererseits ansonsten Luft vorhanden sein, die eine gute Wärmeisolationswirkung zeigt. Auch hierdurch kann ein Ausbreiten von Wärme und damit eines Brandes stark gehemmt werden. Des Weiteren kann in dem Hohlraum zumindest bereichsweise ein Funktionsmaterial, beispielsweise ein schalldämmendes oder wärmedämmendes Dämmmaterial, und/oder eine Kühleinrichtung oder ein Kühlmittel angeordnet sein. Auch ein wärmedämmendes Dämmmaterial in dem Hohlraum kann ein Ausbreiten von Wärme und damit eines Brandes ebenfalls gut hemmen. Bei einer besonders effektiven Ausgestaltung kann eine Kühleinrichtung oder ein Kühlmittel in dem Hohlraum angeordnet sein, wodurch hiermit ein quasi aktives Entgegenwirken gegen übermäßige Wärmeentwicklung ermöglicht ist.

Ganz grundsätzlich können die Platten zur sicheren Wärmeisolation wärmedämmend ausgebildet sein, wobei vorzugsweise die Platten Gipskarton, einen Faserverbundwerkstoff oder Holz aufweisen oder aus einem Gipskarton, Faserverbundwerkstoff oder Holz ausgebildet sein können. All diese konkreten Materialien bieten eine geringe Wärmeleitfähigkeit und hohe Wärmeisolation von einem durch übermäßige Hitzeentwicklung betroffenen Abschnitt zu einem benachbarten, mittels einer Wand separierten Abschnitt.

Alternativ oder zusätzlich hierzu können die Platten aus mindestens zwei unterschiedlichen Materialien ausgebildet sein. Hierdurch lassen sich besonders vorteilhafte Eigenschaften eines Materials durch besonders vorteilhafte Eigenschaften eines anderen Materials ergänzen und insgesamt eine besonders effektive Wärmedämmung und Sicherheit für das Lager- und Entnahmesystem erreichen. So kann beispielsweise mindestens eine Platte auf einer Seite des Trägers ein anderes Material aufweisen als mindestens eine weitere Platte auf einer anderen Seite des Trägers.

Im Hinblick auf einen besonders sicheren Betrieb des Lager- und Entnahmesystems auch bei Realisierung einer erfindungsgemäßen Wand kann die Wand zumindest auf einer Seite eine zur Führung von Lagergut und/oder Lastaufnahmemitteln geeignete Führungseinrichtung aufweisen. Eine solche Führungseinrichtung kann in vorteilhafter Weise auch auf beiden Seiten einer Wand realisiert sein, wobei die Realisierung der Führungseinrichtung dort sinnvoll ist, wo sich Lagergut und/oder Lastaufnahmemittel entlang einer Wand bewegen. Eine solche Führungseinrichtung gewährleistet eine problemlose und sichere Führung von Lagergut und/oder Lastaufnahmemitteln beim üblichen Einlagern und/oder Auslagern von Lagergut in einer Lagersäule und damit bei einem Bewegen von Lagergut und/oder Lastaufnahmemitteln entlang der Wand.

In besonders sicherer und einfacher Weise kann die Führungseinrichtung als zumindest bereichsweise aufgebrachte äußere Lage der Wand oder einer Platte oder äußere Gleitschicht auf der Wand oder einer Platte ausgebildet sein. Eine solche äußere Lage oder äußere Gleitschicht ermöglicht ein sicheres Gleiten oder Bewegen von Lagergut und/oder Lastaufnahmemitteln entlang der Wand, ohne dass die Wand oder Lagergut oder Lastaufnahmemittel beim Betrieb beschädigt werden. Vorzugsweise kann die äußere Lage oder Gleitschicht aus einem nicht brennbaren Material, beispielsweise aus Metall, vorzugsweise aus einem Metallblech oder Stahlblech, bestehen oder ein solches Material aufweisen. Insbesondere ein Metallblech und ganz besonders ein Stahlblech bietet eine hohe Widerstandskraft gegen Wärmeeinwirkung und gleichzeitig eine hohe mechanische Robustheit beim üblichen Betrieb, bei dem es vorkommen kann, dass Lagergut und/oder Lastaufnahmemittel in einen direkten Gleitkontakt mit der äußeren Lage oder Gleitschicht gelangen.

Alternativ oder zusätzlich zu dieser Ausbildung einer Führungseinrichtung kann die Führungseinrichtung mindestens ein auf der Wand oder auf einer Platte ausgebildetes oder an der Wand oder an einer Platte befestigtes, vorzugsweise U-förmiges oder L-förmiges, Führungselement aufweisen. Ein derartiges Führungselement, das beispielsweise schienenförmig realisiert sein kann, kann weiterhin derart ausgebildet sein, dass es im ausgebildeten oder befestigten Zustand von der Wand oder der Platte abragt und hierdurch eine Führung für Rollen oder ein Gleitelement eines Lastaufnahmemittels und/oder ein Gleitlager für Lagergut bildet. Hierdurch ist ein besonders sicherer Betrieb des Lager- und Entnahmesystems gewährleistet.

In besonders vorteilhafter Weise kann der Träger aus Metall, vorzugsweise Stahl, ausgebildet sein. Dies ermöglicht eine besonders hohe Hitzebeständigkeit des Trägers, insbesondere bei einer Ausbildung aus Stahl. Falls übliche aus Aluminium hergestellte Regalsteher aufgrund einer Hitzeeinwirkung nicht mehr stabil sind, so kann der Träger, insbesondere im Falle einer Anordnung des Trägers in einem gegen Wärme abgeschirmten Hohlraum zwischen zwei Platten, die Stabilisierungsfunktion der instabilen Regalsteher übernehmen. Hierdurch ist ebenfalls ein besonders sicherer Betrieb des Lager- und Entnahmesystems gewährleistet.

Alternativ oder zusätzlich hierzu kann der Träger mindestens einen Regalsteher bilden oder aufweisen. Dabei kann der Träger von vornherein derart konstruiert sein, dass er auch die Funktion mindestens eines Regalstehers übernehmen kann, wobei hier eine integrale Ausgestaltung von Regalstehern und Wand realisiert sein kann. In diesem Fall kann eine entsprechende Anzahl von Regalstehern bei der Herstellung des Lager- und Entnahmesystems eingespart werden.

Hinsichtlich einer besonders sicheren Anordnung der Wand in einem Lager- und Entnahmesystem kann die Wand - vorzugsweise unmittelbar oder direkt - in einen Regalsteher oder in eine in dem Regalsteher gebildete Aufnahme eingesteckt sein, wobei vorzugsweise die Aufnahme im Wesentlichen U-förmig oder als U-förmige Schiene ausgebildet sein kann. Hierbei ist in einfacher Weise kein weiteres Adapterteil erforderlich, um eine sichere Ankopplung der Wand an einen Regalsteher zu realisieren. Die Wand kann dabei hinsichtlich ihrer Dicke derart dimensioniert sein, dass sie gerade noch und vorzugsweise passgenau in den Regalsteher oder in die die Aufnahme hineinpasst. Die Aufnahme ist hierbei also geringfügig weiter ausgebildet als die Dicke der Wand.

Alternativ oder zusätzlich zu dieser im letzten Absatz erläuterten Kopplung zwischen Wand und Regalstehern kann die Wand mittels einer Befestigungseinrichtung mit einem Regalsteher gekoppelt sein. Insbesondere die zusätzliche Kopplung mittels einer Befestigungseinrichtung gewährleistet eine besonders hohe Stabilität der Gesamtkonstruktion des Lager- und Entnahmesystems. In besonders einfacher und sicherer Weise kann die Befestigungseinrichtung vorzugsweise Schraubelemente oder Klemmelemente aufweisen, mit denen eine sichere Kopplung zwischen Wand und Regalstehern realisierbar ist.

Je nach Anwendungsfall und individueller Konstruktion kann die Wand zumindest abschnittsweise einen oder mehrere Regalsteher ersetzen. Hierbei kann die Wand quasi durchgehend ausgebildet sein, d. h. ohne Unterbrechung durch Regalsteher. Eine Führung von Lagergut und/oder Lastaufnahmemitteln kann in diesem Fall durch zur Wand benachbart angeordnete Regalsteher erfolgen.

Weiterhin zur Gewährleistung eines besonders sicheren Betriebs des Lager- und Entnahmesystems kann sich die Wand in einer vertikalen Richtung bis zur Gitterstruktur erstrecken. Hierdurch ist ganz grundsätzlich eine besonders stabile Konstruktion des Lager- und Entnahmesystems und damit ein besonders sicherer Betrieb ermöglicht. Dabei kann die Wand vorzugsweise, insbesondere durch den Träger, zur Abstützung der Gitterstruktur und/oder Schienen ausgebildet sein. Dies ermöglicht einerseits ein Weglassen von Regalstehern und eine durchgehende Ausbildung der Wand und eine erhöhte Widerstandsfähigkeit gegen eine Hitzeeinwirkung durch die vorzugsweise durch Platten vor Wärme geschützten und/oder aus Stahl ausgebildeten Träger. Alternativ oder zusätzlich hierzu kann in vorteilhafter Weise zwischen der Wand und der Gitterstruktur ein Dämpfungselement, beispielsweise aus Gummi, angeordnet sein, um insbesondere einen möglichst geräuschlosen Betrieb zu gewährleisten. Das Dämpfungselement kann auch aus einem hitzebeständigen Material realisiert sein, um die Abstützungswirkung für die Gitterstruktur und/oder Schienen auch bei starker Hitzeeinwirkung möglichst lange aufrechtzuerhalten.

Bei einem weiteren Ausführungsbeispiel kann an der Wand oder an einer Platte zumindest bereichsweise ein bei Erwärmung fließendes Material oder Mittel realisiert sein. Bei einer Erwärmung kann ein solches Material oder Mittel aufgrund der Schwerkraftwirkung nach unten laufen und eine Abdichtung für ein fluides Medium wie beispielsweise Wasser oder Luft zwischen der Wand oder Platte und einem Untergrund erzeugen. Hierdurch kann beispielsweise ein schädliches Laufen von Kühlwasser aus einem von einem Feuer betroffenen Abschnitt in andere Abschnitte vermindert oder verhindert werden und/oder es kann eine Versorgung eines Feuers durch Luft aus der Umgebung in einen von einem Feuer betroffenen Abschnitt vermindert werden.

Bei einem weiteren Ausführungsbeispiel kann an der Wand mindestens ein Code angeordnet sein, um eine Positionierung von Lagergut und/oder eines Lastaufnahmemittels zu vereinfachen. Ein solcher Code kann auf unterschiedliche Weise ausgestaltet sein, beispielsweise als QR-Code, und kann eine Positionsinformation aufweisen.

Bei einem weiteren Ausführungsbeispiel kann der Wand zu Inspektionszwecken eine zumindest bereichsweise entlang der Wand, beispielsweise mithilfe eines Seils, bewegbare oder verfahrbare Kamera zugeordnet sein. Alternativ oder zusätzlich zu einer derartigen Kamera kann der Wand eine Drohne zugeordnet sein, die in geeigneter Weise entlang der Wand fliegen kann und mittels einer an der Drohne realisierten Kamera ebenfalls eine Überwachung oder Inspektion der Wand bereitstellen kann.

Bei einem weiteren Ausführungsbeispiel kann eine elektrische Spannung an die Wand anlegbar sein. Dabei kann die Spannung sehr gering sein, um einen nur geringen Stromfluss zu realisieren. Eine Unterbrechung des Stromflusses kann auf eine Beschädigung der Wand hindeuten, sodass Reparaturmaßnahmen oder Wartungsmaßnahmen zur Aufrechterhaltung eines sicheren Betriebs des Lager- und Entnahmesystems rechtzeitig eingeleitet werden können.

Im Folgenden werden Vorteile und Aspekte von Ausführungsbeispielen der vorliegenden Erfindung erläutert:
Eine Wand gemäß Ausführungsbeispielen der vorliegenden Erfindung ist zur örtlichen Begrenzung von Bränden in einem Lager- und Entnahmesystem, beispielsweise einem Blocklager, geeignet. Eine solche Wand kann aus mehrlagigen Platten bestehen, wobei die Platten auf einen Träger oder ein Tragwerk, beispielsweise einen Stahlständer, angebracht sein können.

Die Platten können eine äußere Lage aufweisen, welche geeignet ist, Lagergut und Lastaufnahmemittel zu führen. Die äußere Lage kann als Gleitschicht ausgebildet sein. Des Weiteren können die Platten auf einem speziell hierfür errichteten Tragwerk - Ständer - angebracht werden.

Grundsätzlich kann die Wand so breit bzw. dick wie eine normale Reihe von Regalstehern sein, so dass die Gitterstruktur oder das Grid darüber unverändert bleiben kann. Die Wand kann direkt und passgenau in einen Regalsteher oder Grid-Steher - ohne Adapter - gesteckt werden, wobei die Wand zusätzlich mit dem Regalsteher oder Grid-Steher verbunden, beispielsweise geschraubt, werden kann.

Die Wand kann derart ausgebildet sein, dass sie das Tragwerk verstärkt. Dies führt zu einer verbesserten Statik und zu einer erhöhten Widerstandsfähigkeit gegen Erdbeben.

Platten aus Gipskarton, Faserverbundwerkstoffen oder Holz bieten eine sehr gute Wärmedämmung und weisen gute Feuerwiderstandsfähigkeiten auf. Durch das Aufstellen eines Stahltragwerks oder Trägers und beidseitiges Anbringen der beschriebenen Platten oder Brandschutzplatten wird die Tragwerkskonstruktion durch deren wärmedämmenden Eigenschaften von der Hitze eines Feuers abgeschirmt und kann diesem daher deutlich länger standhalten.

Die Platten oder Brandschutzplatten können zudem auf jeweils einer Seite ein teil- oder ganzflächig aufgebrachtes Stahlblech aufweisen. Die Platten können derart auf dem Tragwerk angebracht werden, dass sich die Stahlbleche auf der Außenseite befinden. Durch diese vorteilhafte Anbringung ist es möglich, dass Lagerfahrzeuge die glatte Oberfläche der Stahlbleche als Führung verwenden und die direkt angrenzenden Lagerplätze somit nutzen können, ohne dass zusätzliche Führungsschienen angebracht werden müssen. Die Stahlbleche schützen zudem die dahinterliegenden Lagen der Platten gegen Wasser oder Trümmerteile, welche im Brandfall in die Wand fallen und diese beschädigen oder zerstören können.

Weitere Vorteile und Aspekte von Ausführungsbeispielen der vorliegenden Erfindung:
- Durch die Konstruktion der Brandschutzeinrichtung und insbesondere der Wand ist es nicht notwendig, eine Reihe an Gitterzellen oder Gridfeldern freizulassen, um aus Gründen des Brandschutzes eine Separierung des Lager- und Entnahmesystems in definierbare Abschnitte zu realisieren. Hierfür ist eine geringere Strahlungswärme durch beispielsweise Gips, der Wärme kaum leitet und abstrahlt vorteilhaft, wobei darüber hinaus ein isolierender Luftspalt zwischen Gipsplatten eine weitere Isolierung bewirkt.
- Die erfindungsgemäße Wand kann entsprechend geltenden Normen aus Standardteilen, welche es in jedem Baumarkt/Fachmarkt gibt, gebaut werden.
- Eine mit einem Stahl oder Stahlblech versehene Seite der Wand ermöglicht ein besonders sicheres Gleiten eines Behälters und/oder Lastaufnahmemittels, wohingegen eine einfache Gipskarton-Wand den Behälter oder das Lastaufnahmemittel bremsen würde. Eine Gipskarton-Wand könnte zudem schnell verschleißen und ggf. aufgerissen werden. Eine Gipskartonplatte weist häufig eine leicht beschädigbare Karton/Papierschicht auf, die einen Gipskern umhüllt.
- Ein Lastaufnahmemittel und ein Behälter werden durch die zwei der Wand gegenüberliegenden Regalsteher geführt, wobei Regalsteher direkt an der Wand entfallen können.
- Auf die Wand könnten Führungselemente für Behälter und Lastaufnahmemittel, beispielsweise Greifer, zusätzlich aufgebracht werden.
- Platten sollten so angebracht werden, dass keine Kanten entstehen, an denen ein Behälter beim Einführen oder an einem Plattenstoß verkanten könnte.
- Der Aufbau der Wand sollte gleich breit oder schmaler als die Breite der Schienen für ein Transportfahrzeug sein, unter denen sie verläuft. Dies gilt insbesondere bei einem Ausführungsbeispiel, bei dem die Wand zwischen den Regalstehern oder durchgehend realisiert ist.
- Die Abstützung der Wand gegen ein Umfallen erfolgt, indem sie auf dem Boden steht und dort ggf. mit Verbindungsmitteln befestigt wird. Zudem kann die Wand oben an der Gitterstruktur oder am Grid mit Verbindungsmitteln oder einer Befestigungseinrichtung befestigt werden.
- Schienen und Wand können derart verbunden sein, dass Bewegungen/Biegen der Schienen keinen negativen Einfluss auf die Wand und den zerbrechlichen Gips haben. Zur Verbindung können beispielsweise flexible Übergangselemente, beispielsweise dazwischen angeordnete Gummiplatten, verwendet werden. Alternativ hierzu kann etwas Spiel zwischen Schienen und Wand mittels beispielsweise einer Verbindung über Nut und Feder realisiert werden.
- Bei der erfindungsgemäßen Wand kann etwas Wasser (Sprinkler, Feuerwehr) durch die Wand treten. Die Wand muss nicht wasserdicht sein.
- Die Wand kann in vorgefertigten Elementen/Modulen montiert werden. Diese Wandelemente könnten dazu eine Verbindungsmöglichkeit über Nut und Feder aufweisen.
- Die Wände können beispielsweise farbig markiert werden, um Bedienern Hinweise zu geben, beispielsweise hinsichtlich eines Fluchtwegs oder hinsichtlich eines vorliegenden Gridabschnitts.
- Die Wände können in den Bereichen, in denen keine Behälter geführt werden, mit einem Material bestrichen werden, das sich bei Erhitzung verflüssigt und die Wände am Boden wasserdicht abdichtet.
- Die Wände können außerhalb der Gitterstruktur oder des Grids weitergeführt werden, ggf. kann die komplette Halle auf diese Weise in Brandabschnitte unterteilt werden. Falls gewünscht, können Brandschutztore in den Wänden verbaut sein.
- Zur Inspektion der Wand kann eine Kamera an einem Seil die Wand abfahren. Das Seil kann dabei so angebracht sein, dass es die Transportfahrzeuge oder Roboter in ihrem Betrieb nicht stört.
- Die Gridfelder rechts und links der Wand können flurfrei sein, sodass der Boden entlang der Wand befahrbar ist.
- Die Wand kann auch als Abgrenzung zu Zwecken des Schutzes vor einem unberechtigten Zutritt durch nicht autorisierte Personen und vor einer unberechtigten Wegnahme von Gegenständen verwendet werden. Die Stahlbleche bieten hierfür einen besonders hohen Schutz. Hierbei kann die Wand einen Teil einer Schutzeinrichtung bereitstellen.
- Es kann eine - vorzugsweise geringfügige - elektrische Spannung an die Metalloberfläche - eine äußere Lage oder Gleitschicht - angelegt werden, um z.B. zu messen, ob die Wand intakt ist - durchgängiger Kontakt - oder um über beispielsweise eine Messung des elektrischen Widerstands eine Feuchtigkeit zu erkennen.
- In die Wand können spezielle Gewebe eingearbeitet werden, z.B. um Funkwellen zu schwächen und/oder die Wand zu verstärken.
- Die Zwischenräume oder Hohlräume der Wand können mit einem Material/Stoff gefüllt werden, das/der einen bestimmten Zweck erfüllt - beispielsweise thermische Isolation, Brandschutz und/oder Schallschutz.
- Die Wand kann nach unten weitergeführt werden oder dort an andere Wände - beispielsweise Brandschutzwände - anschließen, wenn das Grid oder die Gitterstruktur z.B. über einem Keller oder auf einer Bühne steht.
- Die Position einer Wand oder Brandwand kann außen am Grid oder an der Gitterstruktur markiert sein, um deren Position schnell ersichtlich zu haben.
- Es können mehrere dieser Wände hinter- oder nebeneinander angebracht werden.
- Die Wände können sich kreuzen.
- Die Wand könnte von innen im Zwischenraum oder Hohlraum gekühlt werden.
- Durch eine äußere Lage oder Gleitschicht aus Metall, beispielsweise eine Stahlplatte, wird die Wand stabiler.
- Die Wand kann Bewegungsfugen aufweisen, z.B. wenn ein großes Grid über Dehnungsfugen einer Bodenplatte läuft.
- Die Wand kann gegen Feuchtigkeit imprägniert sein.
- In der Tragstruktur der Wand oder Brandwand können vertikale Stützen, beispielsweise Stahl-Ständer, für die Schienen für Transportfahrzeuge verbaut sein. Die Stützen können sich in Geometrie und Funktion von den ansonsten im Grid verwendeten Regalstehern unterscheiden.
- Die Wand kann tragend oder nicht-tragend ausgeführt werden, sie kann also die Kräfte der Transportfahrzeuge oder Roboter darüber aufnehmen oder nicht. Im letzten Fall können entsprechend stabil oder massiv ausgebildete Schienen eine fehlende Steherreihe überbrücken.
- An der Wand können Codes zur vertikalen Positionierung angebracht werden.

Die Gitterstruktur des Lager- und Entnahmesystems, die in diesem Dokument auch als Grid bezeichnet wird, kann Längstransportwege in einer Längsrichtung und Quertransportwege in einer Querrichtung definieren, wobei mindestens ein zum Fahren entlang der Längstransportwege und/oder Quertransportwege ausgebildetes Transportfahrzeug für Behälter eingesetzt werden kann.

Des Weiteren ist festzuhalten, dass in diesem Dokument mit dem Begriff "Behälter" jegliches Behältnis oder jegliche Aufnahmeeinrichtung umfasst ist, das oder die zum Lagern und/oder Transportieren von geeignetem Fördergut geeignet ist.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele des erfindungsgemäßen Lager- und Entnahmesystems und der erfindungsgemäßen Wand anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigen
- Fig. 1: in einer schematischen und perspektivischen Explosionsdarstellung eine Wand gemäß einem Ausführungsbeispiel der vorliegenden Erfindung,
- Fig. 2: in einer schematischen und perspektivischen Darstellung eine Anordnung mehrerer Wände gemäß Fig. 1 in einem Lager- und Entnahmesystem,
- Fig. 3 bis 5: in schematischen Draufsichten Ausführungsbeispiele einer Ankopplung einer Wand gemäß Fig. 1 an einen Regalsteher,
- Fig. 6: in einer schematischen und perspektivischen Darstellung eine Wand gemäß einem weiteren Ausführungsbeispiel der vorliegenden Erfindung in einem Lager- und Entnahmesystem, wobei sich die Wand durchgehend entlang mehrerer Gitterzellen erstreckt, und
- Fig. 7 bis 9: in schematischen Draufsichten Ausführungsbeispiele der Wand gemäß Fig. 6.

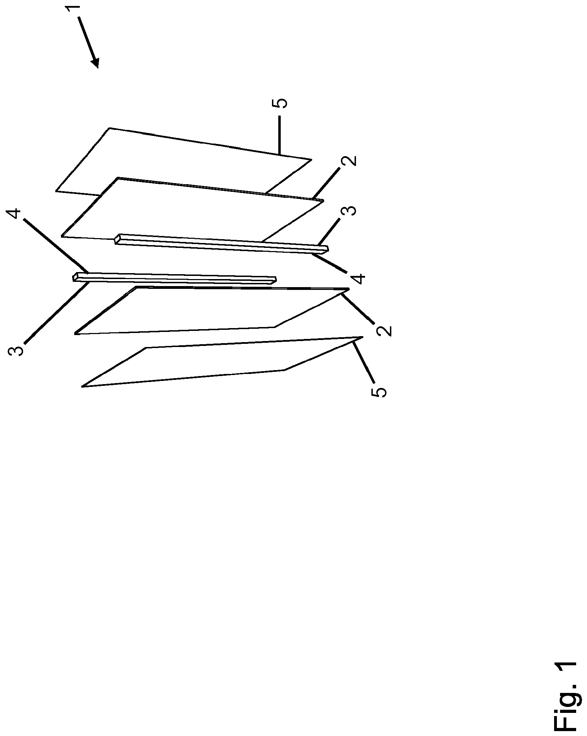

Fig. 1 zeigt in einer schematischen und perspektivischen Explosionsdarstellung eine Wand 1 gemäß einem Ausführungsbeispiel der vorliegenden Erfindung. Die Wand 1 ist als Brandschutzwand ausgebildet und weist zwei Platten 2 in Form von Gipsplatten auf, die bei diesem Ausführungsbeispiel jeweils auf einer Seite eines Trägers 3 angeordnet werden, um einen mehrlagigen Aufbau zu bilden. Der Träger 3 weist zwei längliche Profilelemente 4 auf, die einen rechteckigen Querschnitt aufweisen und als Hohlprofil aus Stahl ausgebildet sind, sodass durch den Träger 3 ein Stahl-Ständer realisiert ist. Auf Außenseiten beider Platten 2 ist jeweils eine Gleitschicht 5 zur Führung von in dieser Fig. 1 nicht gezeigten Behältern und/oder Lastaufnahmemitteln angeordnet. Die beiden Gleitschichten 5 sind als Stahlplatte ausgebildet. Der Aufbau der Wand 1 ist daher wie folgt: Gleitschicht 5, Gipsplatte 2, Stahl-Ständer, Gipsplatte 2, Gleitschicht 5

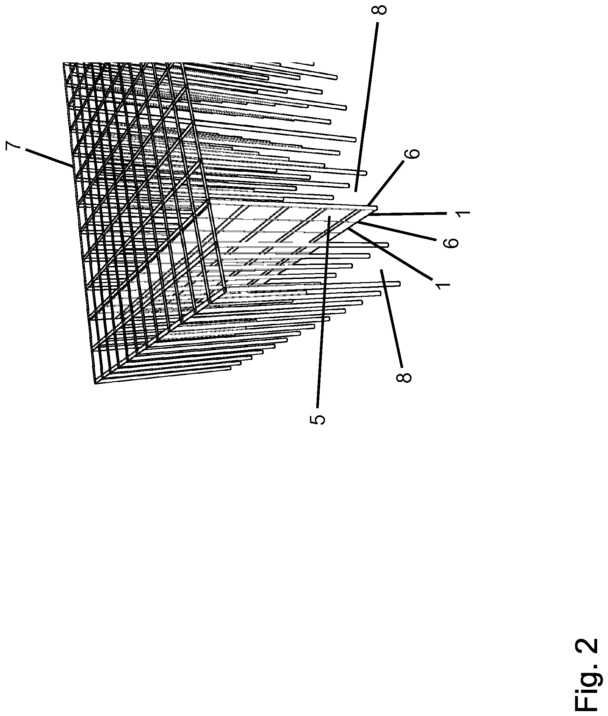

Fig. 2 zeigt in einer schematischen und perspektivischen Darstellung eine Anordnung mehrerer Wände 1 gemäß Fig. 1 zwischen Regalstehern 6 in einem Lager- und Entnahmesystem, das eine Gitterstruktur 7 und darunter gebildete Lagersäulen 8 aufweist, wobei die Wände 1 im Wesentlichen bündig zwischen den Regalstehern 6 des Lager- und Entnahmesystems angeordnet sind. Die Wände 1 sind im Konkreten als Wandstreifen in einem Freiraum zwischen Regalstehern 6 angeordnet. Die aus Aluminium hergestellten Regalsteher 6 bleiben dabei erhalten. Im Fall eines Brandes werden die Regalsteher 6 heiß und können sich verformen, was zu einem Ausfall der Wand 1 führen könnte. Allerdings können die in den Wänden 1 angeordneten Träger 3 eine jeweilige Wand 1 weiterhin stabil und in stehendem Zustand halten, da die Träger 3 im Gegensatz zu den aus Aluminium hergestellten Regalstehern 6 zum einen aus temperaturbeständigerem Stahl hergestellt sind und zum anderen thermisch geschützt zwischen den beiden Platten 2 angeordnet sind. Daher können die Wände 1 der Temperatur eines Brandes länger widerstehen als die Regalsteher 6.

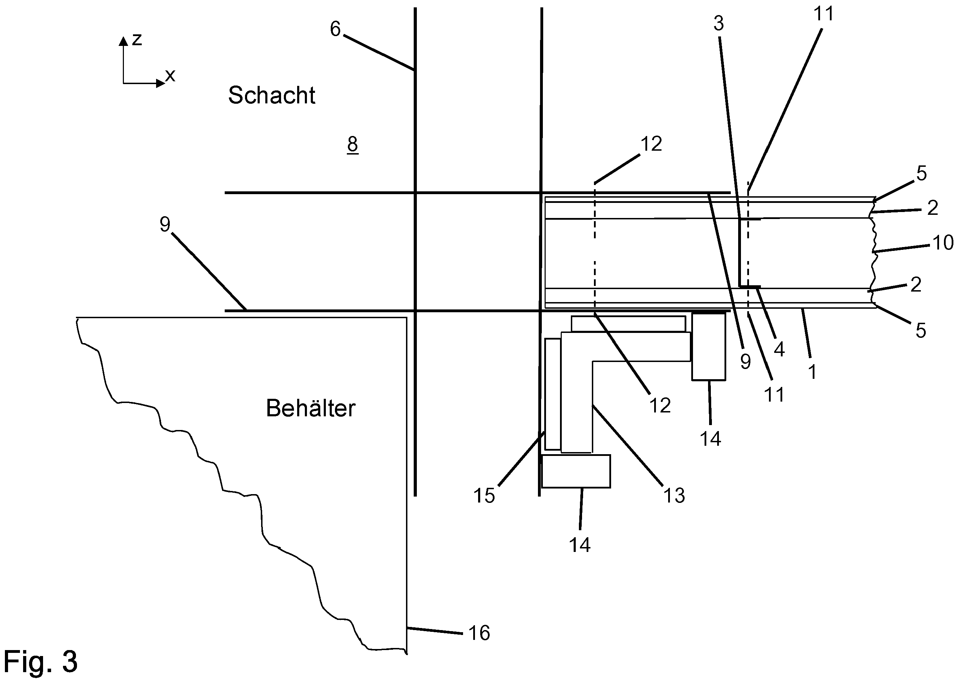

Die Fig. 3 bis 5 zeigen in schematischen Draufsichten Ausführungsbeispiele einer Ankopplung einer Wand 1 gemäß Fig. 1 an einen Regalsteher 6, wobei die Wand 1 zwischen Regalstehern 6 angeordnet ist.

Gemäß Fig. 3 ist eine Wand 1 in eine in dem Regalsteher 6 gebildete Aufnahme 9 eingesteckt oder eingeschoben. Die Wand 1 weist den in Fig. 1 gezeigten Aufbau aus an einem Träger 3 angeordneten Platten 2 in Form von Gipsplatten 2 mit auf den Gipsplatten 2 angeordneten Gleitschichten 5 auf. Zwischen den Platten 2 ist ein Hohlraum 10 gebildet, in dem sich der Träger 3 bzw. die Profilelemente 4 erstreckt bzw. erstrecken. Im Hohlraum 10 kann Luft oder ein anderes Isolationsmaterial oder Funktionsmaterial angeordnet sein. Die Gleitschicht 5, Gipsplatte 2 und der Träger 3 sind mittels Schrauben 11 miteinander fixiert. Die Schrauben 11 können vollständig versenkbare Senkkopf- oder Trompetenkopfschrauben sein. In der Gleitschicht 5 ist hierzu eine Bohrung mit einer Senkung vorgesehen. Ein als Gleitschicht 5 dienendes Stahlblech kann beispielsweise eine Dicke von etwa 0,4 mm aufweisen.

Die Wand 1 kann mittels einer Befestigungseinrichtung am Regalsteher 6 fixiert werden. Hierzu kann die Befestigungseinrichtung Schrauben 12 aufweisen, beispielsweise vollständig versenkbare Senkkopfschrauben. Eine solche Schraubverbindung kann zwischen Regalsteher 6, Gleitschicht 5 und Platte 2 realisiert sein.

Ein Lastaufnahmemittel in Form eines Greifers 13 in einer Lagersäule 8 oder in einem Schacht wird durch den Regalsteher 6 geführt. Der Greifer 13 weist Rollen 14 und/oder Gleitleisten 15 auf. Behälter 16 können ebenfalls durch einen Regalsteher 6 oder eine Gleitschicht 5 geführt werden.

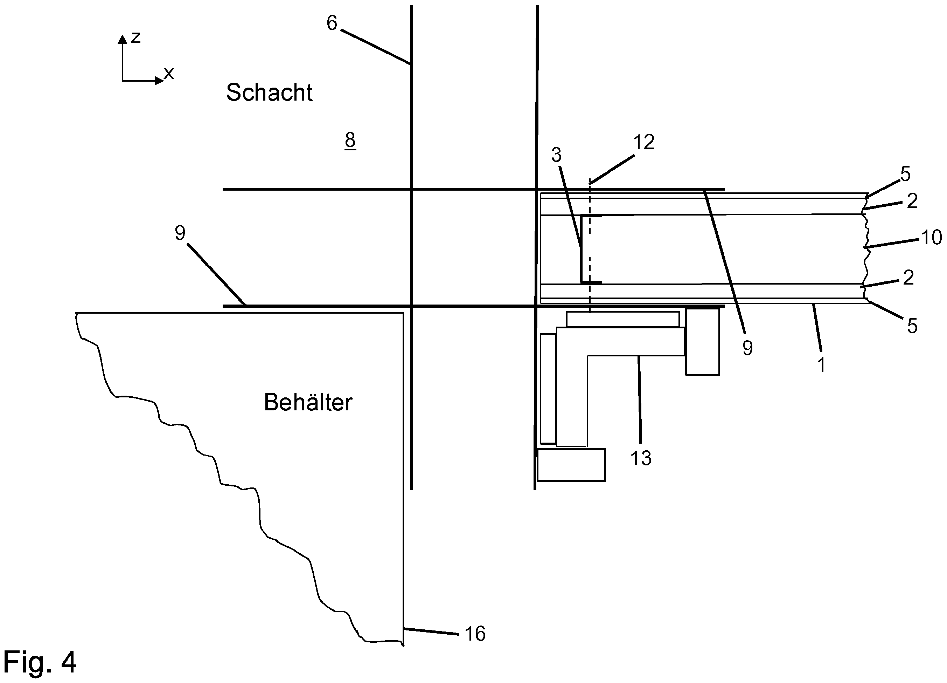

Das in Fig. 4 gezeigte Ausführungsbeispiel entspricht im Wesentlichen dem in Fig. 3 gezeigten Ausführungsbeispiel, wobei sich die Art der Ankopplung der Wand 1 am Regalsteher 6 unterscheidet. Bei diesem in Fig. 4 gezeigten Ausführungsbeispiel sind Schrauben 12 im Bereich der Aufnahme 9 des Regalstehers 6 durch den Regalsteher 6, die Gleitschicht 5 und die Platte 2 in den Träger 3 geschraubt. Hierbei sind im Regalsteher 6 entsprechende Durchgangsbohrungen mit einer Senkung für die Schrauben 12 realisiert. Dieses Ausführungsbeispiel ist vorteilhaft, wenn die Brandschutzwand zusätzlich zum Brandschutz in einem höheren Maß statische Aufgaben erfüllen soll. Durch die Verschraubung mit dem Träger 3 ist die Gesamtstabilität des Lager- und Entnahmesystems erhöht.

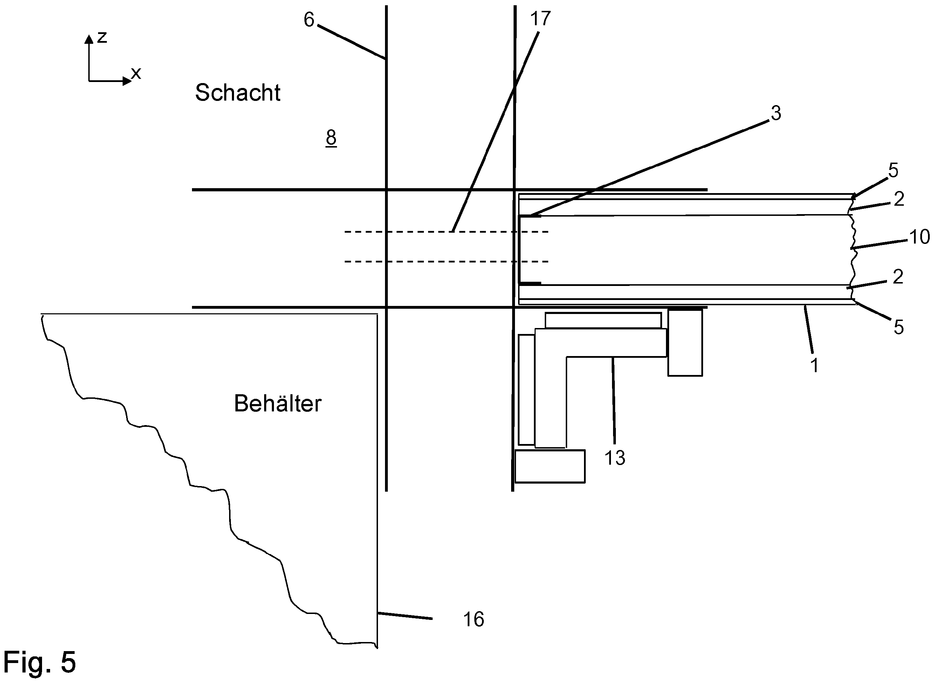

Das in Fig. 5 gezeigte Ausführungsbeispiel entspricht ebenfalls im Wesentlichen dem in Fig. 3 gezeigten Ausführungsbeispiel, wobei sich die Art der Ankopplung der Wand 1 am Regalsteher 6 unterscheidet. Bei diesem in Fig. 5 gezeigten Ausführungsbeispiel ist eine Schraubverbindung mittels Schrauben 17 in Form von beispielsweise Blechschrauben 17 realisiert, die sich ein Gewinde in den Träger 3 schneiden können. Hierfür wird in dem Regalsteher 6 zuvor eine Durchgangsbohrung realisiert. Die Schrauben 17 werden hierbei seitlich in die Wand 1 eingeschraubt.

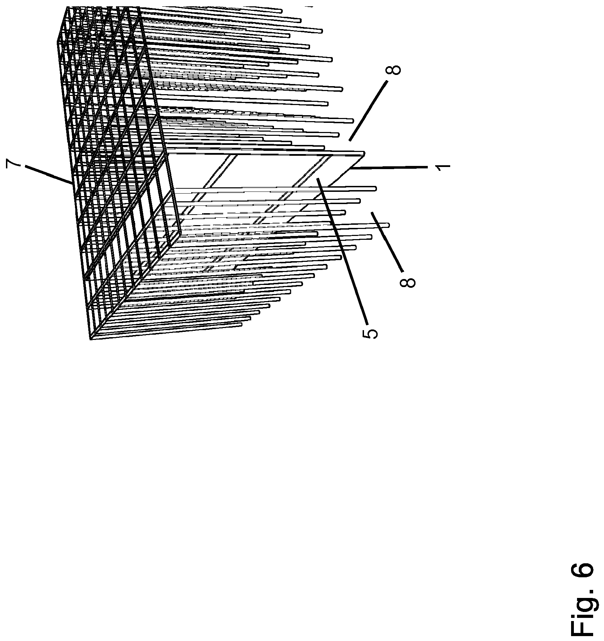

Fig. 6 zeigt in einer schematischen und perspektivischen Darstellung eine Wand 1 gemäß einem weiteren Ausführungsbeispiel der vorliegenden Erfindung in einem Lager- und Entnahmesystem, wobei sich die Wand 1 durchgehend entlang mehrerer Gitterzellen erstreckt und damit dort ansonsten vorgesehene Regalsteher 6 ersetzt. Die in der Wand 1 realisierten Träger 3 sind durch die Platten 2 wärmegeschützt, sodass die Wand 1 oder Brandschutzwand sicher steht als Regalsteher 6 aus Aluminium. Bei der durchgehenden Realisierung der Wand 1 ist im Gegensatz zur Wand 1 gemäß den Fig. 2 bis 5 vorteilhaft, dass in der durchgehenden Wand 1 keine regelmäßigen Kopplungsbereiche zwischen einer Wand 1 und Regalstehern 6 und damit weniger Spalten zwischen Elementen der Wand vorliegen, durch die brennbares Rauchgas strömen kann.

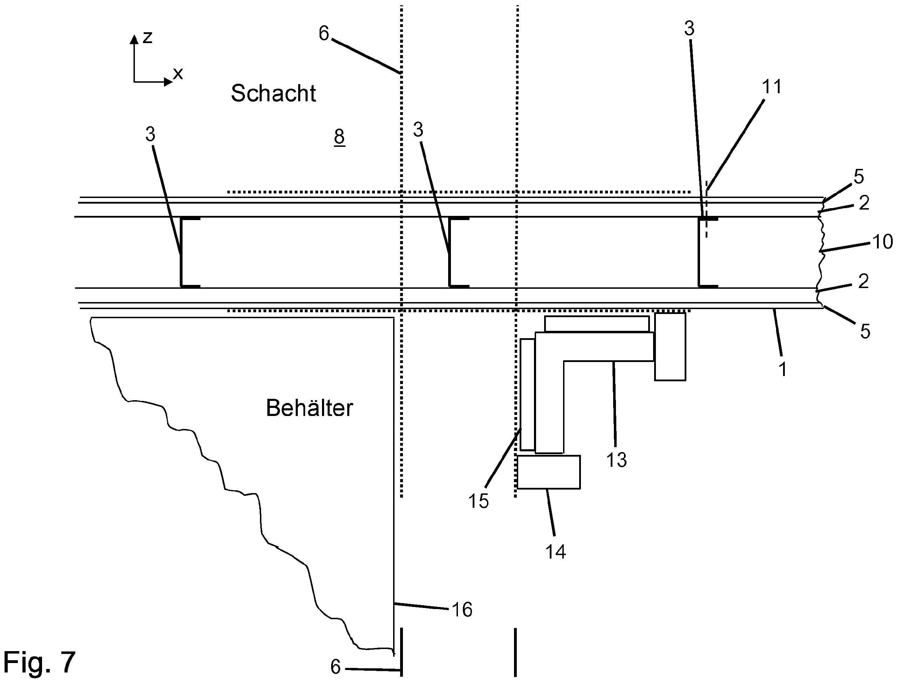

Die Fig. 7 bis 9 zeigen in schematischen Draufsichten Ausführungsbeispiele einer Wand 1 gemäß Fig. 6, wobei die Wand 1 durchgehend in einer Gitterstruktur 7 angeordnet ist.

Gemäß Fig. 7 ist eine Wand 1 durchgehend im Lager- und Entnahmesystem realisiert, sodass Regalsteher 6 in dem Bereich der durchgehenden Wand 1 entfallen, wobei ein ansonsten realisierter Regalsteher 6 in gepunkteten Linien angedeutet ist. Angrenzend an die Wand 1 ist im unteren Bereich der Fig. 7 jedoch ein Regalsteher 6 einer nächsten Steherreihe teilweise dargestellt. Diese nächste Steherreihe übernimmt eine Positionierung für einen Behälter 16 und/oder ein Lastaufnahmemittel in Form beispielsweise eines Greifers 13 in x-Richtung. Ein in einer an die Wand 1 angrenzenden Lagersäule 8 zu bewegender Behälter 16 oder Greifer 13 ist hierbei im Wesentlichen nur durch die Regalsteher 6 der nächsten Steherreihe und in weniger starkem Umfang durch die Gleitschicht 5 der Wand 1 geführt. Der Greifer 13 weist auch bei diesen Ausführungsbeispielen Rollen 14 und/oder Gleitleisten 15 auf.

Die Wand 1 weist den in Fig. 1 gezeigten Aufbau aus an einem Träger 3 angeordneten Platten 2 in Form von Gipsplatten 2 mit auf den Gipsplatten 2 angeordneten Gleitschichten 5 auf. Zwischen den Platten 2 ist ein Hohlraum 10 gebildet, in dem sich der Träger 3 bzw. die Profilelemente 4 erstreckt bzw. erstrecken. Im Hohlraum 10 kann Luft oder ein anderes Isolationsmaterial oder Funktionsmaterial angeordnet sein. Die Gleitschicht 5, Gipsplatte 2 und der Träger 3 sind mittels Schrauben 11 miteinander fixiert. Die Schrauben 11 können vollständig versenkbare Senkkopf- oder Trompetenkopfschrauben sein. In der Gleitschicht 5 ist hierzu eine Bohrung mit einer Senkung vorgesehen.

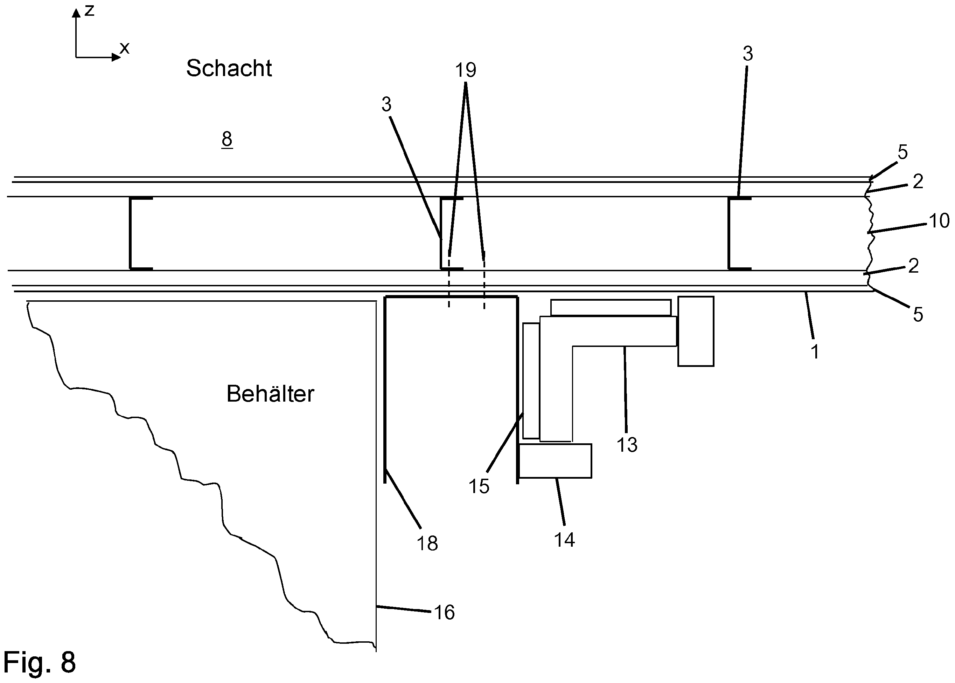

Das in Fig. 8 gezeigte Ausführungsbeispiel entspricht im Wesentlichen dem in Fig. 7 gezeigten Ausführungsbeispiel, wobei bei dem in Fig. 8 gezeigten Ausführungsbeispiel an der Wand 1 eine Führungseinrichtung mit einem U-förmigen Führungselement 18 angeordnet ist. Die Führungseinrichtung dient zur Führung eines Lastaufnahmemittels in Form beispielsweise eines Greifers 13 und/oder eines Behälters 16. Der Greifer 13 weist Rollen 14 und/oder Gleitleisten 15 auf. Das Führungselement 18 ist mittels Schrauben 19 an der Wand 1 befestigt. Dabei kann eine Schraube 19 mit einem Träger 3 oder nur mit dem Wandaufbau aus Platte 2 und Gleitschicht 5 verschraubt sein.

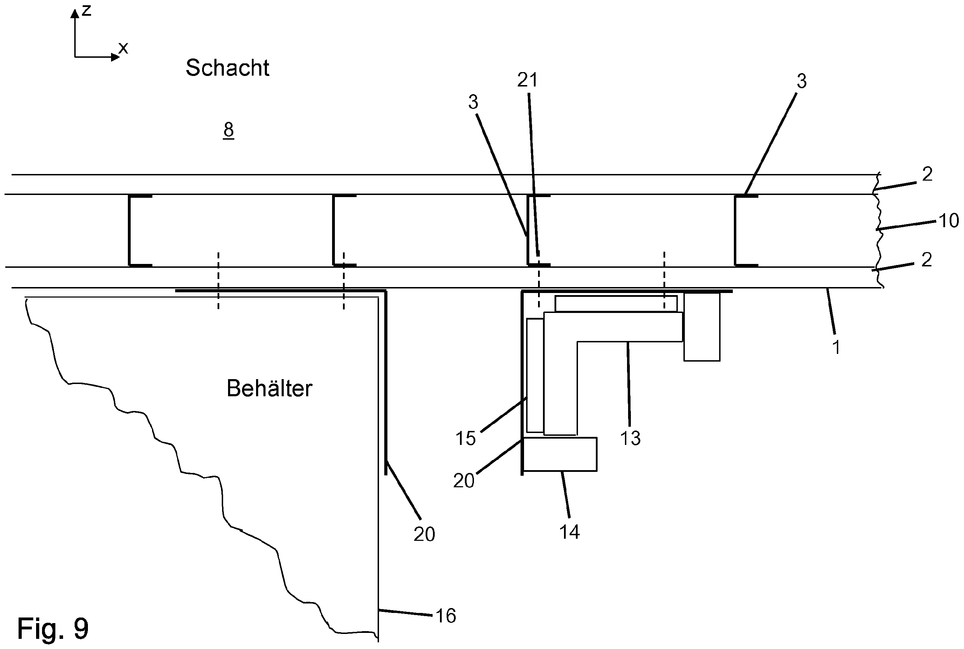

Das in Fig. 9 gezeigte Ausführungsbeispiel entspricht im Wesentlichen dem in Fig. 7 gezeigten Ausführungsbeispiel, wobei bei dem in Fig. 9 gezeigten Ausführungsbeispiel an der durchgehenden Wand 1, die hier keine Gleitschichten 5 aufweist, eine Führungseinrichtung mit zwei L-förmigen Führungselementen 20 angeordnet ist. Die Führungseinrichtung dient zur Führung eines Lastaufnahmemittels in Form beispielsweise eines Greifers 13 und/oder eines Behälters 16. Der Greifer 13 weist Rollen 14 und/oder Gleitleisten 15 auf. Die Führungselemente 20 sind mittels Schrauben 21 an der Wand 1 befestigt. Dabei kann eine Schraube 21 mit einem Träger 3 oder nur mit einer Platte 2 verschraubt sein. Die Schrauben 21 können vollständig versenkbare Senkkopf- oder Trompetenkopfschrauben sein. In dem Führungselement 20 sind hierzu Bohrungen mit einer Senkung vorgesehen.

Grundsätzlich gilt für alle Ausführungsbeispiele, dass in den Flächen, beispielsweise eine Gleitschicht 5 oder eine Fläche eines Regalstehers 6, die eine Führung für Behälter 16 oder Lastaufnahmemittel wie beispielsweise Greifer 13 übernehmen, Schrauben mit einem versenkbaren Kopf eingesetzt werden und Durchgangsbohrungen für die Schrauben mit einer passenden Senkung versehen werden, sodass kein Schraubenkopf störend übersteht oder heraussteht. Dabei sollen die Schrauben möglichst nicht nur das Eigengewicht der Wand 1 halten, sondern auch das Grid oder die ganze Gitterstruktur 7 versteifen, beispielsweise als Erdbebenschutz.

Hinsichtlich weiterer vorteilhafter Ausgestaltungen des erfindungsgemäßen Lager- und Entnahmesystems sowie der erfindungsgemäßen Wand wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Wand
- 2: Platte, Gipsplatte
- 3: Träger
- 4: Profilelement
- 5: Gleitschicht
- 6: Regalsteher
- 7: Gitterstruktur
- 8: Lagersäule
- 9: Aufnahme
- 10: Hohlraum
- 11: Schraube
- 12: Schraube
- 13: Greifer
- 14: Rolle
- 15: Gleitleiste
- 16: Behälter
- 17: Schraube
- 18: U-förmiges Führungselemente
- 19: Schraube
- 20: L-förmiges Führungselemente
- 21: Schraube

## Patentansprüche

1. Lager- und Entnahmesystem für Behälter (16), umfassend:
eine Gitterstruktur (7) mit einer Vielzahl von Gitterzellen, wobei jede Gitterzelle eine Lagersäule (8) einer unterhalb der Gitterstruktur (7) angeordneten Behälter-Lagerstruktur definiert und wobei die Lagersäulen (8) ein Tragwerk aus mehreren Regalstehern (6) aufweisen und eingerichtet sind, jeweils einen vertikalen Stapel von Behältern (16) aufzunehmen, und
eine Schutzeinrichtung oder Brandschutzeinrichtung mit mindestens einer einen Träger (3) aufweisenden Wand (1) zum Unterteilen des Lager- und Entnahmesystems in mehrere Abschnitte,
**dadurch gekennzeichnet, dass** die Wand (1) mehrere in mehrlagiger Weise an dem Träger (3) angeordnete Platten (2) aufweist.

2. Lager- und Entnahmesystem nach Anspruch 1, **dadurch gekennzeichnet, dass** mindestens eine Platte (2) auf einer Seite des Trägers (3) und mindestens eine weitere Platte (2) auf einer anderen Seite des Trägers (3) angeordnet sind.

3. Lager- und Entnahmesystem nach Anspruch 2, **dadurch gekennzeichnet, dass** zwischen der mindestens einen Platte (2) und der mindestens einen weiteren Platte (2) ein Hohlraum (10) gebildet ist, wobei vorzugsweise in dem Hohlraum (10) zumindest bereichsweise ein Funktionsmaterial, beispielsweise ein schalldämmendes oder wärmedämmendes Dämmmaterial, und/oder eine Kühleinrichtung oder ein Kühlmittel angeordnet sind oder ist.

4. Lager- und Entnahmesystem nach einem der Ansprüche 1 bis 3, **dadurch gekennzeichnet, dass** die Platten (2) wärmedämmend ausgebildet sind, wobei vorzugsweise die Platten (2) Gipskarton, einen Faserverbundwerkstoff oder Holz aufweisen oder aus einem Gipskarton, Faserverbundwerkstoff oder Holz ausgebildet sind, und/oder
dass die Platten (2) aus mindestens zwei unterschiedlichen Materialien ausgebildet sind.

5. Lager- und Entnahmesystem nach einem der Ansprüche 1 bis 4, **dadurch gekennzeichnet, dass** die Wand (1) zumindest auf einer Seite eine zur Führung von Lagergut und/oder Lastaufnahmemitteln geeignete Führungseinrichtung aufweist.

6. Lager- und Entnahmesystem nach Anspruch 5, **dadurch gekennzeichnet, dass** die Führungseinrichtung als zumindest bereichsweise aufgebrachte äußere Lage der Wand (1) oder einer Platte (2) oder äußere Gleitschicht (5) auf der Wand (1) oder einer Platte (2) ausgebildet ist, wobei vorzugsweise die äußere Lage oder Gleitschicht (5) aus einem nicht brennbaren Material, beispielsweise aus Metall, vorzugsweise aus einem Metallblech oder Stahlblech, besteht.

7. Lager- und Entnahmesystem nach Anspruch 5 oder 6, **dadurch gekennzeichnet, dass** die Führungseinrichtung mindestens ein auf der Wand (1) oder auf einer Platte (2) ausgebildetes oder an der Wand (1) oder an einer Platte (2) befestigtes, vorzugsweise U-förmiges oder L-förmiges, Führungselement (18, 20) aufweist.

8. Lager- und Entnahmesystem nach einem der Ansprüche 1 bis 7, **dadurch gekennzeichnet, dass** der Träger (3) aus Metall, vorzugsweise Stahl, ausgebildet ist und/oder dass der Träger (3) mindestens einen Regalsteher (6) bildet oder aufweist.

9. Lager- und Entnahmesystem nach einem der Ansprüche 1 bis 8, **dadurch gekennzeichnet, dass** die Wand (1) - vorzugsweise unmittelbar oder direkt - in einen Regalsteher (6) oder in eine in dem Regalsteher (6) gebildete Aufnahme (9) eingesteckt ist, wobei vorzugsweise die Aufnahme (9) im Wesentlichen U-förmig oder als U-förmige Schiene ausgebildet ist.

10. Lager- und Entnahmesystem nach einem der Ansprüche 1 bis 9, **dadurch gekennzeichnet, dass** die Wand (1) mittels einer Befestigungseinrichtung mit einem Regalsteher (6) gekoppelt ist, wobei vorzugsweise die Befestigungseinrichtung Schraubelemente oder Klemmelemente aufweist.

11. Lager- und Entnahmesystem nach einem der Ansprüche 1 bis 10, **dadurch gekennzeichnet, dass** die Wand (1) zumindest abschnittsweise einen oder mehrere Regalsteher (6) ersetzt.

12. Lager- und Entnahmesystem nach einem der Ansprüche 1 bis 11, **dadurch gekennzeichnet, dass** sich die Wand (1) in einer vertikalen Richtung bis zur Gitterstruktur (7) erstreckt, wobei vorzugsweise die Wand (1), insbesondere durch den Träger (3), zur Abstützung der Gitterstruktur (7) und/oder Schienen ausgebildet ist und/oder wobei vorzugsweise zwischen der Wand (1) und der Gitterstruktur (7) ein Dämpfungselement, beispielsweise aus Gummi, angeordnet ist.

13. Lager- und Entnahmesystem nach einem der Ansprüche 1 bis 12, **dadurch gekennzeichnet, dass** an der Wand (1) oder an einer Platte (2) zumindest bereichsweise ein bei Erwärmung fließendes Material oder Mittel realisiert ist und/oder dass an der Wand (1) mindestens ein Code angeordnet ist.

14. Lager- und Entnahmesystem nach einem der Ansprüche 1 bis 13, **dadurch gekennzeichnet, dass** der Wand (1) eine zumindest bereichsweise entlang der Wand (1) bewegbare oder verfahrbare Kamera oder Drohne zugeordnet ist oder dass eine elektrische Spannung an die Wand (1) anlegbar ist.

15. Wand (1) für ein Lager- und Entnahmesystem nach einem der Ansprüche 1 bis 14.
